# EUROPEAN PATENT APPLICATION

(11) **EP 3 866 248 A1**
(43) Date of publication of application: **18.08.2021**
(21) Application number: 19939053.5
(22) Date of filing: 16.12.2019
(51) Int. Cl.: H01M 10/058, H01M 4/62

(54) **BATTERY CELL**

(71) Applicant: Ningde Amperex Technology Ltd., Ningde, Fujian 350900 (CN)
(72) Inventor: XIAO, Liangzhen, Fujian 350900 (CN)
(74) Representative: Klunker IP Patentanwälte PartG mbB
(86) International application number: PCT/CN2019/125628
(87) International publication number: WO 2021/119911

(57) **Abstract**

The application provides a cell, including an electrode assembly, a package, a bonding layer and an electrolyte solution, wherein the electrolyte solution is packaged in the package and is bonded to the package via the bonding layer. A total weight m (g) of the electrode assembly, the package and the electrolyte solution, a minimum encapsulation strength F (N) between a tab of the electrode assembly and the package, a maximum bonding force f (N) of the bonding layer, a maximum distance x (mm) of the bonding layer in a width direction of the electrode assembly, and a maximum distance y (mm) of the bonding layer in a length direction of the electrode assembly satisfy the following relationship: 0.098m/a≤f<F, where a is a smaller value in x and y, causing less risk of electrode assembly tearing or the breaking of the package through the electrode assembly in case of dropping.

## Description

### Field

The application relates to the technical field of lithium-ion batteries, in particular to a cell.

### Background

For a flexibly packaged lithium-ion battery, an electrode assembly is hermetically packaged by a package (for instance, an aluminum-plastic film). In order to prevent the electrode assembly from moving relative to the package, a surface of the electrode assembly is bonded with a double-faced adhesive tape or a hot melt adhesive to adhere to the package. A sticking place between the electrode assembly and the package has a concentrated stress after drop due to excessive adhesion strength therebetween, so that the electrode assembly is torn and the drop is invalid.

### Summary

Based on the deficiencies of the foregoing prior art, the application provides a cell. After the drop of the cell, the risk that the electrode assembly is torn or the electrode assembly breaks through the package can be reduced, and the damage occurrence of the cell can be lowered.

The application provides a cell, including an electrode assembly, a package, a bonding layer and an electrolyte solution, wherein the electrolyte solution is packaged in the package and is bonded to the package via the bonding layer. A total weight m (g) of the electrode assembly, the package and the electrolyte solution, a minimum encapsulation strength F (N) between a tab of the electrode assembly and the package, a maximum adhesion f (N) of the bonding layer, a maximum distance x (mm) of the bonding layer in a width direction of the electrode assembly and a maximum distance y (mm) of the bonding layer in a length direction of the electrode assembly satisfy the following relationship 0.098m/a≤f<F, where, a is a smaller value in x and y.

Optionally, a cross section of the bonding layer is a ring.

Optionally, the electrode assembly includes a first surface and a second surface, the first and/or second surface are provided with the bonding layer, an area of the bonding layer around the first surface is more than an area of the first surface by 1/3, or an area of the bonding layer around the second surface is more than an area of the second surface by 1/3.

Optionally, the cell further includes a substrate arranged on the electrode assembly, and the bonding layer is arranged around a peripheral edge of the substrate.

Optionally, the maximum distance x (mm) of the bonding layer in the width direction of the electrode assembly, the width X (mm) of the electrode assembly, the maximum distance y (mm) of the bonding layer in the length direction of the electrode assembly, and the length Y (mm) of the electrode assembly satisfy the following relationship: 1/2X<x<X, 1/3Y<y<Y.

Optionally, the maximum distance is x (mm) of the bonding layer in the width direction of the electrode assembly and the maximum distance y (mm) of the bonding layer in the length direction of the electrode assembly satisfy the following relationship: 0.5<x/y<2.

Optionally, in the thickness of the cell, a thickness of the cell in an area, where the bonding layer is located, is less than the maximum thickness of the cell.

Optionally, in the length direction of the electrode assembly, the minimum distance of the bonding layer is greater than 2 mm.

Optionally, the package includes a first recess and a second recess, both of which are arranged relatively, and a depth of the first recess is greater than that of the second recess; the electrode assembly is received into a receiving space defined by the first recess and the second recess, and the bonding layer is located between the electrode assembly and the first recess or between the electrode assembly and the second recess.

Optionally, a maximum bonding force f of the bonding layer is 0.05N∼2N.

For the cell provided by the application, a total weight m of the electrode assembly, the package and the electrolyte solution, a minimum top encapsulation strength F, a maximum bonding force f of the bonding layer, a maximum distance x of the bonding layer in a width direction of the electrode assembly and a maximum distance y of the bonding layer in a length direction of the electrode assembly satisfy the following relationship: 0.098m/a≤f<F, where a is a smaller value in x and y, so that the bonding force of the bonding layer is in an appropriate range, being able to balance the risk of electrode assembly tearing and package top encapsulation breaking, that is, being able to lower the risk of electrode assembly tearing or the breaking of the package through the electrode assembly.

### Brief Description of the Figures

In order to more clearly describe the technical solutions in the embodiments of the application or the prior art, the drawings needed in the description of the embodiments or the prior art will be briefly described below. Obviously, the drawings in the description below are just some embodiments of present application. Those of ordinary skill in the art can also obtain other drawings without creative work based on these drawings.
Fig. 1 is a schematic diagram of the structure of an electrode assembly provided by an embodiment of the application.
Fig. 2 is a schematic diagram of the structure of a package provided by an embodiment of the application.
Fig. 3 is a front view of an electrode assembly provided by another embodiment of the application.
Fig. 4 is a front view of an electrode assembly provided by a further embodiment of the application.
Fig. 5 is a schematic diagram of the structure of a package provided by another embodiment of the application.
Fig. 6 is a schematic diagram of the structure of an adhesive paper provided by an embodiment of the application.

### Description of Reference Signs of Main Elements

| | |
|---|---|
| Electrode assembly | 20 |
| Package | 40 |
| Adhesive member | 60 |
| Tab | 24 |
| First surface | 21,41 |
| Second surface | 22, 42 |
| First recess | 412 |
| Second recess | 422 |
| Receiving space | 44 |
| Bonding layer | 62 |
| Substrate | 64, 82 |
| Adhesive paper | 80 |
| Adhesive layer | 84 |

The application will be further described in the following detailed description of the embodiments with reference to the above drawings.

### Detailed Description of the Embodiments

The technical solutions in the embodiments of the application will be clearly and completely described below with reference to the drawings in the embodiments of the application. Obviously, the described embodiments are only some, not all of the embodiments of the application. Any other embodiments obtained by those of ordinary skill in the art based on the embodiments of the application without creative work fall within the protection scope of the application.

It should be noted that unless otherwise defined, all technical and scientific terms used herein have the same meaning as those generally understood by those skilled in the art in the technical field of the application. The terms used in the embodiments of the application are for the purpose of describing specific embodiments only and are not intended to limit the application.

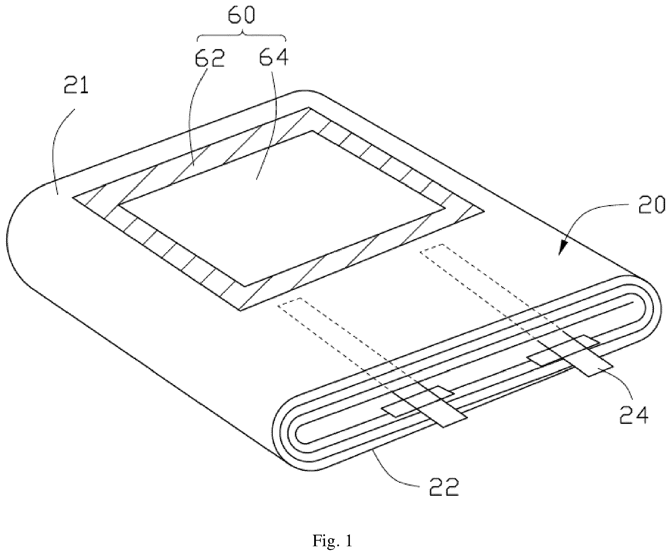

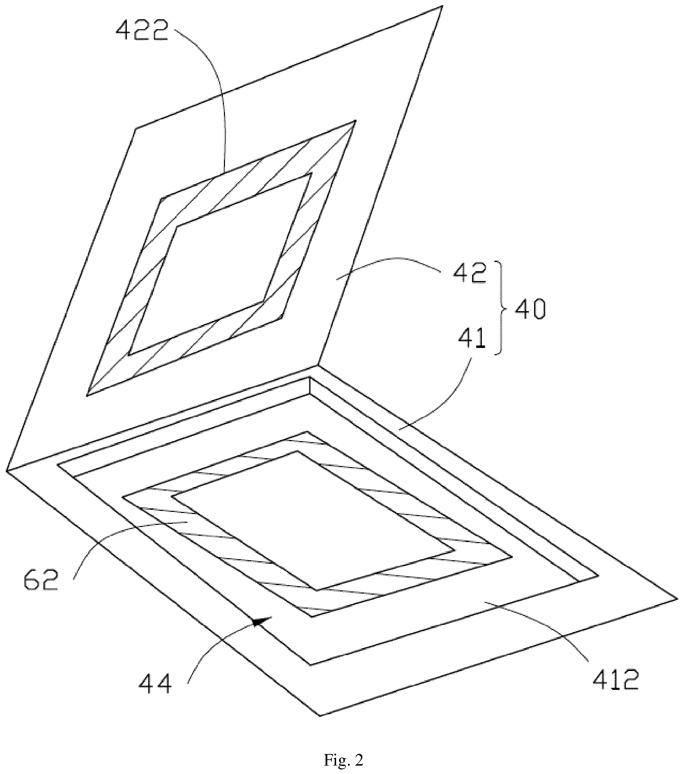

Referring to Figs. 1 and 2, the cell provided by an embodiment of the application includes an electrode assembly 20, a package 40, an adhesive member 60 and an electrolyte solution (not shown). The electrode assembly 20 is encapsulated in the package 40 and is bonded to the package 40 through the adhesive member 60. The electrolyte solution is received in the package 40.

The electrode assembly 20 includes a positive electrode plate, a negative electrode plate, a separator and a tab 24. The separator is arranged between the positive electrode plate and the negative electrode plate. The tab 24 is arranged on the positive electrode plate and the negative electrode plate and is used to export the electrons of the positive electrode plate and the negative electrode plate. The tab 24 extends beyond the positive electrode plate and the negative electrode plate. The positive electrode plate and the negative electrode plate are stacked or wound to form the electrode assembly 20. The electrode assembly 20 includes a first surface 21 and a second surface 22 arranged oppositely. The tab 24 is encapsulated together with the package 40.

The package 40 is used to receive the electrolyte solution and encapsulate the electrode assembly 20. The package 40 can be made of an aluminum plastic film, a steel plastic film or the like. The package 40 includes a first surface 41 and a second surface 42 arranged oppositely. In the present embodiment, the first surface 41 of the package 40 is opposite to the first surface 21 of the electrode assembly 20, and the second surface 42 of the package 40 is opposite to the second surface 42 of the electrode assembly 20. The first surface 41 is arranged with a first recess 412, the second surface 42 is arranged with a second recess 422, and the depth of the first recess 412 is greater than the depth of the second recess 422. The first recess 412 and the second recess 422 jointly form a receiving space 44. The electrode assembly 20 is accommodated in the receiving space 44.

The adhesive member 60 is located between the first recess 412 and the first surface 21. The adhesive member 60 includes a bonding layer 62, the shape of the cross section of the bonding layer 62 along the direction parallel to the plane where the first surface 21 is located is substantially a ring. The bonding layer 62 can be an adhesive layer or an adhesive tape. An area of the ring-shaped bonding layer 62 surrounding a first surface 21 of the electrode assembly 20 is greater than 1/3 of an area of the first surface 21. The bonding layer 62 can be located at any position of the first surface 21. Preferably, in a thickness direction of the electrode assembly 20, a thickness of the electrode assembly 20 in the area where the bonding layer 62 is located is less than a maximum thickness of the electrode assembly 20. For example, the bonding layer 62 avoids the area on the electrode assembly 20 where a positive electrode plate, a negative electrode plate, a separator and a tab 24 are arranged simultaneously, so as to facilitate the thinning of the cell.

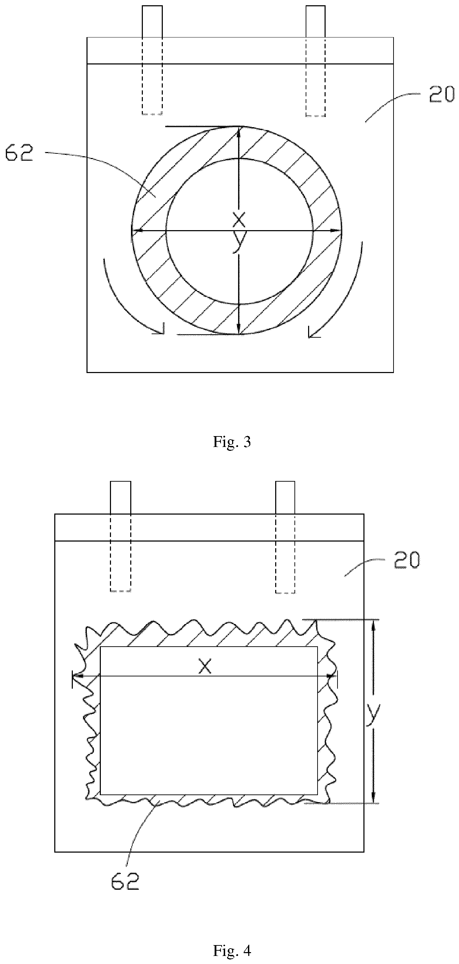

In the present embodiment, the ring is a square ring, that is, the shape of the inner circle and the outer circle of the ring is square. Understandably, the shape of the cross section of the bonding layer 62 along the direction parallel to the plane where the first surface 21 is located can also be a circular ring (referring to Fig. 3), an elliptical ring, a polygonal ring (referring to Fig. 4) or the like. Among them, the circular ring means that the shape of the inner circle and the outer circle is circular, the elliptical ring means that the shape of the inner circle and the outer circle is elliptical, and the polygonal ring means that the shape of the inner circle and/or the outer circle is polygonal. Compared with the whole (plate-shaped) double-sided adhesive, the inner and outer circles of the ring-shaped bonding layer can play a buffering role around and, after the cell drops, can better disperse stress and avoid stress concentration, and has a better buffering effect on the electrode assembly, thereby helping to avoid electrode assembly tearing or the electrode assembly's breaking through of the package. Preferably, the shape of the cross section of the bonding layer 62 along the direction parallel to the plane where the first surface 21 is located is a circular ring or an elliptical ring, which can disperse stress more efficiently.

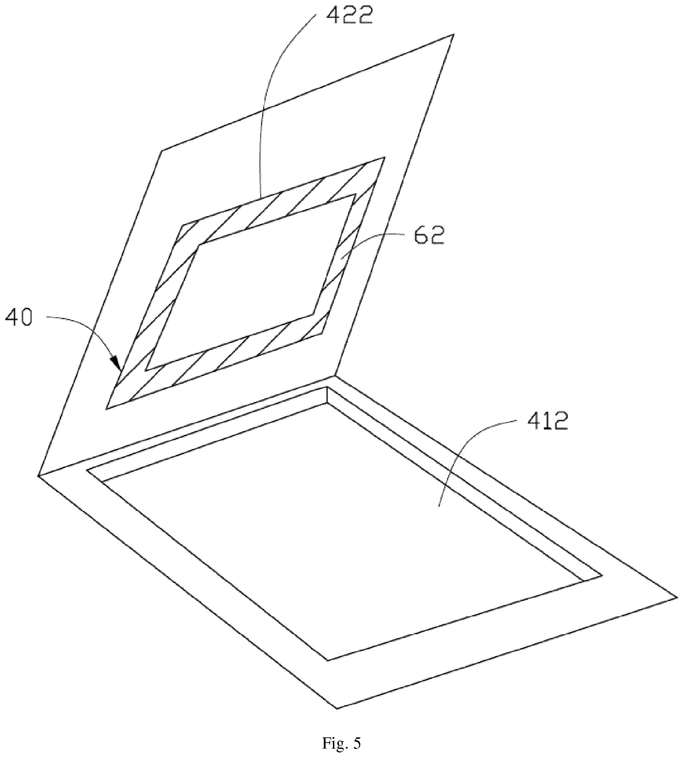

Referring to Fig. 5, for the package 40 provided by another embodiment of the application, the bonding layer 62 is located between the second recess 422 and the second surface of the electrode assembly. An area of the ring-shaped bonding layer 62 surrounding a second surface of the electrode assembly is greater than 1/3 of an area of the second surface.

According to a test, when the adhesive member 60 is located between the second recess 422 of the package 40 and the electrode assembly 20, in case of dropping, the part of the electrode assembly 20 bonded to the adhesive member 60 is more likely to be torn. When the adhesive member 60 is located between the first recess 412 of the package 40 and the electrode assembly 20, in case of dropping, the package 40 is more likely to be broken through by the electrode assembly 20 at the position of encapsulation.

Referring again to Fig. 1, the adhesive member 60 also includes a substrate 64 arranged on the electrode assembly 20. The substrate 64 is substantially plate-shaped. Preferably, the substrate 64 is selected from polyethylene terephthalate. The bonding layer 62 is an adhesive layer and is arranged around the periphery of the substrate 64. Preferably, the material of the bonding layer 62 is selected from hot melt adhesives. The hot melt adhesives are selected from one or more of polyene hot melt adhesives, polyurethane hot melt adhesives, ethylene and its copolymer hot melt adhesives, polyester hot melt adhesives, polyamide hot melt adhesives, and styrene and its block copolymer hot melt adhesives.

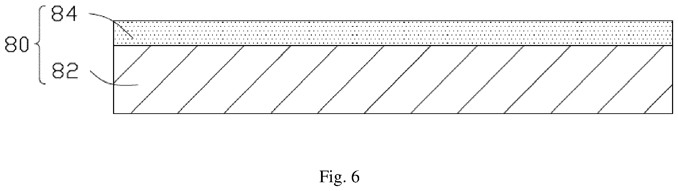

When the bonding layer 62 is an adhesive layer, the bonding layer 62 can be extruded and molded by hot pressing a hot melt adhesive. Specifically, referring to Fig. 6, an adhesive paper 80 is provided, and the adhesive paper 80 is a single-sided adhesive. The adhesive paper 80 includes a substrate 82 and an adhesive layer 84 arranged on the substrate 82, and the adhesive is selected from hot melt adhesives. The structural adhesive paper 80 is stuck to the first surface 21 or the second surface 22 of the electrode assembly 20, and the electrode assembly 20 is encapsulated in the package 40. The area of the package 40 corresponding to the structural adhesive paper 80 is hot pressed, and the adhesive layer 84 is extruded around the substrate 82 to form a ring-shaped bonding layer 62. In an optional embodiment, when the bonding layer 62 is an adhesive layer, it can also be prepared and formed by other methods, such as being formed by directly coating the adhesive on the electrode assembly 20. Understandably, when the bonding layer 62 is an adhesive tape, it is formed by directly sticking the ring-shaped adhesive tape to the electrode assembly 20. In an optional embodiment, the adhesive paper 80 can also be a double-sided adhesive, that is, the adhesive layer is arranged on both sides of the substrate, and when hot pressing is performed, the adhesive layers on both sides are extruded around the substrate to jointly form the bonding layer 62.

Optionally, a maximum bonding force f of the bonding layer 62 is 0.05 N∼2 N.

A width X (mm) of the electrode assembly 20 and a maximum distance x (mm) of the bonding layer 62 in a width direction of the electrode assembly 20 satisfy 1/2X<x<X (calculate by the value of each parameter).

A length Y (mm) of the electrode assembly 20 and a maximum distance y (mm) of the bonding layer 62 in a length direction of the electrode assembly 20 satisfy 1/3Y<y<Y. A maximum distance x (mm) of the bonding layer 62 in a width direction of the electrode assembly 20 and a maximum distance y (mm) of the bonding layer 62 in a length direction of the electrode assembly 20 satisfy the following relationship: 0.5<x/y<2. A minimum distance of the bonding layer 62 in a length direction of the electrode assembly 20 is greater than 2 mm.

A minimum encapsulation strength F (N) between the tab 24 and the package 40, a total weight m (g) of the electrode assembly 20, the package 40 and the electrolyte solution, a maximum bonding force f (N) of the bonding layer 62, a maximum distance x (mm) of the bonding layer 62 in a width direction of the electrode assembly 20 and a maximum distance y (mm) of the bonding layer 62 in a length direction of the electrode assembly 20 satisfy the following relationship: 0.098m/a≤f<F (calculate by the value of each parameter), where a is a smaller value in x and y.

The size of the bonding force of the ring-shaped bonding layer 62 has an important influence on electrode assembly tearing or package top encapsulation breaking. If the bonding force is too small, the bonding layer cannot buffer the electrode assembly in the dropping process, which is more likely to cause the electrode assembly to break through the position of the top encapsulation of the package. If the bonding force is too large, the bonding layer may severely tear the electrode assembly in the dropping process, causing the electrode assembly to be torn.

For the cell provided by the application, a total weight m (g) of the electrode assembly 20, the package 40 and the electrolyte solution, a minimum top encapsulation strength F (N), a maximum bonding force f (N) of the bonding layer 62, a maximum distance x (mm) of the bonding layer 62 in a width direction of the electrode assembly 20 and a maximum distance y (mm) of the bonding layer 62 in a length direction of the electrode assembly 20 satisfy the following relationship: 0.098m/a≤f<F, where a is a smaller value in x and y, so that the bonding force of the bonding layer is in an appropriate range, being able to balance the risk of electrode assembly tearing and package top encapsulation breaking, that is, being able to lower the risk of electrode assembly tearing or the breaking of the package through the electrode assembly.

In addition, the bonding layer 62 is ring-shaped, and its inner and outer circles can play a buffering role, are conducive to stress dispersion and further lower the risk of electrode assembly tearing or the electrode assembly's breaking through the a package. A width X (mm) and a length Y (mm) of the electrode assembly, a maximum distance x (mm) of the bonding layer in a width direction of the electrode assembly and a maximum distance y (mm) of the bonding layer in a length direction of the electrode assembly satisfy the following relationships: 1/2X<x<X and 1/3Y<y<Y, balancing a stress of the bonding layer in the width direction and the length direction of the electrode assembly, and further lowering the risk of electrode assembly tearing or the breaking of the package through the electrode assembly. An area of the bonding layer 62 surrounding a first surface 21 of the electrode assembly 20 is greater than 1/3 of an area of the first surface 21, or an area of the bonding layer 62 surrounding a second surface 22 of the electrode assembly 20 is greater than 1/3 of an area of the second surface 22, that is, the ring-shaped bonding layer 62 has a relatively large area, is conducive to stress dispersion, avoids stress concentration and further lowers the risk of electrode assembly tearing or the breaking of the package through the electrode assembly.

The application will be elaborated below by virtue of embodiments. The bonding force of the bonding layer in the application is measured by using a universal tensile machine to test the tension of stripping an electrode assembly and a package.

### Embodiment 1

A cell is provided, wherein a total weight m of the electrode assembly, the package and the electrolyte solution is 52.3g, an encapsulation strength F of the package at the position of the tab is 2.51N, a maximum bonding force f of the ring-shaped bonding layer is 0.3N, a length Y of the electrode assembly is 81 mm, a width X of the electrode assembly is 61 mm, a maximum distance y of the bonding layer in a length direction of the electrode assembly is 40 mm, and a maximum distance x of the bonding layer in a width direction of the electrode assembly is 45 mm.

### Embodiment 2

A cell is provided, wherein a total weight m of the electrode assembly, the package and the electrolyte solution is 52.2g, an encapsulation strength F of the package at the position of the tab is 2.55N, a maximum bonding force f of the ring-shaped bonding layer is 1N, a length Y of the electrode assembly is 81 mm, a width X of the electrode assembly is 61 mm, a maximum distance y of the bonding layer in a length direction of the electrode assembly is 40 mm, and a maximum distance x of the bonding layer in a width direction of the electrode assembly is 45 mm.

### Embodiment 3

A cell is provided, wherein a total weight m of the electrode assembly, the package and the electrolyte solution is 52.2g, an encapsulation strength F of the package at the position of the tab is 2.55N, a maximum bonding force f of the ring-shaped bonding layer is 2N, a length Y of the electrode assembly is 81 mm, a width X of the electrode assembly is 61 mm, a maximum distance y of the bonding layer in a length direction of the electrode assembly is 40 mm, and a maximum distance x of the bonding layer in a width direction of the electrode assembly is 45 mm.

### Embodiment 4

A cell is provided, wherein a total weight m of the electrode assembly, the package and the electrolyte solution is 52.3g, an encapsulation strength F of the package at the position of the tab is 2.6N, a maximum bonding force f of the ring-shaped bonding layer is 0.1N, a length Y of the electrode assembly is 81 mm, a width X of the electrode assembly is 61 mm, a maximum distance y of the bonding layer in a length direction of the electrode assembly is 40 mm, and a maximum distance x of the bonding layer in a width direction of the electrode assembly is 45 mm.

### Embodiment 5

A cell is provided, wherein a total weight m of the electrode assembly, the package and the electrolyte solution is 52.3g, an encapsulation strength F of the package at the position of the tab is 2.45N, a maximum bonding force f of the ring-shaped bonding layer is 5N, a length Y of the electrode assembly is 81 mm, a width X of the electrode assembly is 61 mm, a maximum distance y of the bonding layer in a length direction of the electrode assembly is 40 mm, and a maximum distance x of the bonding layer in a width direction of the electrode assembly is 45 mm.

### Embodiment 6

A cell is provided, wherein a total weight m of the electrode assembly, the package and the electrolyte solution is 52.1g, an encapsulation strength F of the package at the position of the tab is 2.65N, a maximum bonding force f of the ring-shaped bonding layer is 20N, a length Y of the electrode assembly is 81 mm, a width X of the electrode assembly is 61 mm, a maximum distance y of the bonding layer in a length direction of the electrode assembly is 40 mm, and a maximum distance x of the bonding layer in a width direction of the electrode assembly is 45 mm.

### Embodiment 7

A cell is provided, wherein a total weight m of the electrode assembly, the package and the electrolyte solution is 52.2g, an encapsulation strength F of the package at the position of the tab is 2.55N, a maximum bonding force f of the ring-shaped bonding layer is 0.3N, a length Y of the electrode assembly is 81 mm, a width X of the electrode assembly is 61 mm, a maximum distance y of the bonding layer in a length direction of the electrode assembly is 40 mm, and a maximum distance x of the bonding layer in a width direction of the electrode assembly is 15 mm.

### Embodiment 8

A cell is provided, wherein a total weight m of the electrode assembly, the package and the electrolyte solution is 52.2g, an encapsulation strength F of the package at the position of the tab is 2.53N, a maximum bonding force f of the ring-shaped bonding layer is 2N, a length Y of the electrode assembly is 81 mm, a width X of the electrode assembly is 61 mm, a maximum distance y of the bonding layer in a length direction of the electrode assembly is 40 mm, and a maximum distance x of the bonding layer in a width direction of the electrode assembly is 15 mm.

### Embodiment 9

A cell is provided, wherein a total weight m of the electrode assembly, the package and the electrolyte solution is 52.1g, an encapsulation strength F of the package at the position of the tab is 2.46N, a maximum bonding force f of the ring-shaped bonding layer is 1N, a length Y of the electrode assembly is 81 mm, a width X of the electrode assembly is 61 mm, a maximum distance y of the bonding layer in a length direction of the electrode assembly is 20 mm, and a maximum distance x of the bonding layer in a width direction of the electrode assembly is 45 mm.

The cell provided by embodiments 1-9 is subject to a drop test: fixing the cell in a mobile phone case, and performing the drop test several times at a height of 1m∼1.8m to test whether the electrode assembly is torn and whether the position of the top encapsulation of the cell is broken through by the electrode assembly. The relationship between parameters and test results of each cell in embodiments 1-9 are shown in Table 1.

**Table 1 Relationship Between Parameters and Test Results of Each Cell in Embodiments 1-9**

| | Maximum bonding force f (N) | Satisfy 0.098m/a≤f<F or not | Satisfy 1/3Y<y<Y and 1/2X<x<X or not | Drop pass rate | Tear or not | Break through or not |
|---|---|---|---|---|---|---|
| Embodiment 1 | 0.3 | Yes | Yes | 10/10 | No | No |
| Embodiment 2 | 1 | Yes | Yes | 10/10 | No | No |
| Embodiment 3 | 2 | Yes | Yes | 10/10 | No | No |
| Embodiment 4 | 0.1 | No | Yes | 8/10 | No | Yes (2/10) |
| Embodiment 5 | 5 | No | Yes | 7/10 | Yes (3/10) | Yes (2/10) |
| Embodiment 6 | 20 | No | Yes | 0/10 | Yes (10/10) | Yes (8/10) |
| Embodiment 7 | 0.3 | No | No | 1/10 | Yes (8/10) | Yes (6/10) |
| Embodiment 8 | 2 | Yes | No | 2/10 | Yes (8/10) | Yes (7/10) |
| Embodiment 9 | 1 | Yes | No | 3/10 | Yes (7/10) | Yes (5/10) |

It can be seen from Table 1 that the parameters of the cell provided by embodiments 1-3 satisfy the following relationships: 0.098m/a≤f<F, 1/3Y<y<Y and 1/2X<x<X, and in case of dropping, the electrode assembly is not torn, and the position of the top encapsulation of the cell is not broken through by the electrode assembly. It can be seen from embodiments 4-6 and embodiments 8 and 9 that with the increase of the maximum bonding force f, the drop pass rate of the cell decreases and the probability of electrode assembly being torn and of the position of the top encapsulation of the cell being broken through increases.

The parameters of the cell provided by embodiment 4 fail to satisfy the following relationship: 0.098m/a≤f<F, and in 10 drop tests, the position of the top encapsulation of the cell is broken through by the electrode assembly twice. The bonding force of the bonding layer is relatively weak (f is 0.1N and its ratio to F is 0.038), which has limited bonding and buffering effects and causes part of the top encapsulation of the cell to be broken through.

The parameters of the cell provided by embodiment 5 fail to satisfy the following relationship: 0.098m/a≤f<F, and in 10 drop tests, the position of the top encapsulation of the cell is broken through by the electrode assembly twice and the electrode assembly is torn three times. The bonding force of the bonding layer is relatively strong (f is 5N and its ratio to F is 2.04), which is prone to cause the electrode assembly to be torn and subsequently cause part of the top encapsulation of the cell to be broken through.

The parameters of the cell provided by embodiment 6 fail to satisfy the following relationship: 0.098m/a≤f<F, and in 10 drop tests, the position of the top encapsulation of the cell is broken through by the electrode assembly eight times but the electrode assembly is torn. The bonding force of the bonding layer is too strong (f is 20N and its ratio to F is 7.55), which is prone to cause the electrode assembly to be torn and subsequently cause most of the top encapsulation of the cell to be broken through.

The parameters of the cell provided by embodiment 7 fail to satisfy the following relationships: 0.098m/a≤f<F, 1/3Y<y<Y and 1/2X<x<X, and in 10 drop tests, the position of the top encapsulation of the cell is broken through by the electrode assembly six times and the electrode assembly is not torn eight times. The local stress of the bonding layer in the width direction is relatively large (the ratio of x to X is 0.25, and the ratio of y to Y is 0.49), which is prone to cause the electrode assembly to be torn and subsequently cause most of the top encapsulation of the cell to be broken through.

The parameters of the cell provided by embodiment 8 fail to satisfy the following relationships: 1/3Y<y<Y and 1/2X<x<X, and in 10 drop tests, the position of the top encapsulation of the cell is broken through by the electrode assembly seven times and the electrode assembly is not torn eight times. The local stress of the bonding layer in the width direction is relatively large (the ratio of x to X is 0.25, and the ratio of y to Y is 0.49), which is prone to cause the electrode assembly to be torn and subsequently cause most of the top encapsulation of the cell to be broken through.

The parameters of the cell provided by embodiment 9 fail to satisfy the following relationships: 1/3Y<y<Y and 1/2X<x<X, and in 10 drop tests, the position of the top encapsulation of the cell is broken through by the electrode assembly five times and the electrode assembly is not torn seven times. The local stress of the bonding layer in the length direction is relatively large (the ratio of x to X is 0.74, and the ratio of y to Y is 0.25), which is prone to cause the electrode assembly to be torn and subsequently cause most of the top encapsulation of the cell to be broken through.

Those disclosed above are only better embodiments of the application, and of course cannot be used to limit the scope of claims of the application. Therefore, equivalent changes made according to the claims of the application still fall within the scope of the application.

## Claims

1. A cell, comprising an electrode assembly, a package, a bonding layer and an electrolyte solution, the electrode assembly being encapsulated in the package and bonded with the package by the bonding layer, wherein a total weight m (g) of the electrode assembly, the package and the electrolyte solution, a minimum encapsulation strength F (N) between a tab of the electrode assembly and the package, a maximum bonding force f (N) of the bonding layer, a maximum distance x (mm) of the bonding layer in a width direction of the electrode assembly, and a maximum distance y (mm) of the bonding layer in a length direction of the electrode assembly satisfy the following relationship: 0.098m/a≤f<F, where a is the smaller value in x and y.

2. The cell according to claim 1, wherein a shape of a cross section of the bonding layer is a ring.

3. The cell according to claim 2, wherein the electrode assembly comprises a first surface and a second surface arranged oppositely, the first surface and/or the second surface are arranged with the bonding layer, an area of the bonding layer surrounding the first surface is greater than 1/3 of an area of the first surface, or an area of the bonding layer surrounding the second surface is greater than 1/3 of an area of the second surface.

4. The cell according to claim 2, wherein the cell also comprises a substrate arranged on the electrode assembly, and the bonding layer is arranged around the periphery of the substrate.

5. The cell according to claim 1, wherein the maximum distance x (mm) of the bonding layer in the width direction of the electrode assembly, a width X (mm) of the electrode assembly, the maximum distance y (mm) of the bonding layer in the length direction of the electrode assembly, and a length Y (mm) of the electrode assembly satisfy the following relationships: 1/2X<x<X and 1/3Y<y<Y.

6. The cell according to claim 1, wherein the maximum distance x (mm) of the bonding layer in the width direction of the electrode assembly and the maximum distance y (mm) of the bonding layer in the length direction of the electrode assembly satisfy the following relationship: 0.5<x/y<2.

7. The cell according to claim 1, wherein in a thickness direction of the cell, a thickness of the cell in an area where the bonding layer is located is less than a maximum thickness of the cell.

8. The cell according to claim 1, wherein in the length direction of the electrode assembly, a minimum distance of the bonding layer is greater than 2 mm.

9. The cell according to claim 1, wherein the package comprises a first recess and a second recess arranged oppositely, a depth of the first recess is greater than that of the second recess, the electrode assembly is accommodated in a receiving space formed by the first recess and the second recess, and the bonding layer is located between the electrode assembly and the first recess or located between the electrode assembly and the second recess.

10. The cell according to claim 1, wherein the maximum bonding force f of the bonding layer is 0.05N∼2N.
